# FASCICULE DE BREVET EUROPEEN

(11) **EP 0 539 267 B1**
(45) Date de publication et mention de la délivrance du brevet: **18.06.1997**
(21) Numéro de dépôt: 92402793.1
(22) Date de dépôt: 13.10.1992
(51) Int. Cl.: H04B 10/17

(54) **Liaison à fibres optiques amplificatrices**
Verbindung mit faseroptischen Verstärkern
Link with optical fibre amplifiers

(30) Priorité: 15.10.1991 FR 9112674
(43) Date de publication de la demande: 28.04.1993
(73) Titulaire: ALCATEL N.V., NL-1077 XX Amsterdam (NL)
(72) Inventeur: Blondel, Jean-Pierre, F-78220 Viroflay (FR); Chesnoy, José, F-75014 Paris (FR)
(74) Mandataire: Dalsace, Michel

(56) Documents cités:
- EP-A- 0 421 675
- US-A- 5 050 949
- APPLIED OPTICS. vol. 29, no. 24, 20 Août 1990, NEW YORK US pages 3503 - 3509 P. URQUHART ET AL 'Long span fiber amplifiers'
- ELECTRONICS LETTERS. vol. 26, no. 20, 27 Septembre 1990, STEVENAGE GB pages
- 1658 - 1659 D.M.SPIRIT ET AL '5 Gbit/s, +10dBm lossless Transmission in 10km distributed Erbium fibre amplifier'

## Description

La présente invention concerne la réalisation d'une liaison permettant la transmission d'informations sur une distance pouvant être très longue, cette distance étant typiquement supérieure à 3000 km dans le cas d'une liaison intercontinentale. Elle concerne plus spécifiquement une liaison à fibres optique comportant des fibres amplificatrices pour compenser l'affaiblissement naturel qui affecte les signaux lorsque ceux-ci sont transmis sans amplification.

De telles fibres amplificatrices sont classiquement dopées à l'erbium. Elles ont d'abord été réalisées avec des longueurs très courtes devant la longueur totale de la liaison. Elles ont alors été localisées dans des amplificateurs.

Les limitations à prendre en compte lors de la conception d'une liaison à très longue distance utilisant des fibres amplificatrices dopées à l'erbium (EDFA) sont essentiellement dues à deux phénomènes :
- l'accumulation du bruit d'émission spontanée amplifiée (ASE). On peut noter à ce sujet que, pour obtenir une performance (en terme de rapport signal sur bruit) fixée au bout d'une distance donnée, il est nécessaire que la puissance en sortie des amplificateurs (et par conséquent la puissance moyenne en ligne) soit supérieure à une valeur limite. Le fait d'augmenter l'espacement entre les amplificateurs entraîne une augmentation de cette valeur limite.
- les effets dispersifs et non-linéaires. Il a été montré que la dégradation de la qualité de la liaison, due à ces effets, augmente quand la puissance moyenne en ligne croît.

Par ailleurs, diverses configurations de liaison ont été proposées : L'une est l'amplification localisée. Elle utilise des amplificateurs localisés intégrant tous les éléments actifs ou passifs nécessaires à l'amplification (fibre amplificatrice courte et fortement dopée à l'erbium, et injecteurs de pompe, c'est-à-dire diode de pompage fournissant une onde de pompe et multiplexeur pour injecter cette onde dans la fibre amplificatrice...).

Cette configuration de liaison est notamment décrite dans le document "Propagation of signal noise in concatenated erbium-doped fiber optical amplifiers"Journal of lightwave Technology Vol9 N°2 February 1991. C.R. Giles et Emmanuel Desurvie."

Une autre configuration proposée est l'amplification distribuée. Elle est obtenue en utilisant, pour compenser les pertes subies par le signal, une fibre de ligne faiblement dopée et en plaçant, le long de la ligne, des injecteurs de pompe intégrant les diodes de pompage et les multiplexeurs.

Cette configuration de liaison est notamment décrite dans le document cité ci-dessus.

Dans le cas de l'amplification localisée, il est nécessaire, pour que les puissances moyennes en ligne, et donc les effets dispersifs et non-linéaires, ne soient pas trop pénalisants, d'utiliser des distances entre amplificateurs faibles, de l'ordre de 30 à 50 km.

La configuration de l'amplification distribuée est la plus avantageuse du point de vue de l'accumulation du bruit. Dans ce dernier cas, la distance entre injecteurs de pompe est limitée par la puissance de pompe qui doit être injectée dans la fibre. 100 km semble la distance maximale envisageable et exige par ailleurs une puissance de pompe injectée relativement importante (plus de 30 mW).

Une autre configuration possible a été mentionnée par le document de brevet EP-A 421 675 (ATT). C'est une amplification régularisée selon laquelle des tronçons successifs d'une section de ligne, entre deux injecteurs de pompe, présentent des concentrations diverses en un matériau de dopage tel que l'erbium.
Ces concentrations sont choisies pour régulariser la puissance du signal afin de minimiser les effets non linéaires. A partir d'un injecteur de pompe la concentration des tronçons successifs est choisie croissante afin de compenser la décroissance de la puissance de la lumière de pompage. Il est indiqué que certains tronçons peuvent ne présenter aucun dopage.

Cette configuration présente des inconvénients comparables à ceux des autres configurations précédemment proposées.

La présente invention a notamment pour buts de réaliser une liaison où l'espacement entre les injecteurs de pompe soit plus grand que dans le cas de l'amplification localisée et où la puissance de pompe nécessaire soit compatible avec les contraintes du système sans que les effets non linéaires deviennent trop gênants.

Dans ces buts elle propose que certaines au moins des sections de la ligne de transmission d'une liaison comportent des tronçons passifs situés à distance des injecteurs de pompe et transmettant le signal sans compenser son affaiblissement naturel, et des tronçons actifs d'amplification distribuée amplifiant ce signal à proximité de ces injecteurs.

A l'aide des figures schématiques ci-jointes, on va décrire plus particulièrement ci-après, à titre d'exemple non limitatif, comment la présente invention peut être mise en oeuvre.

La figure 1 représente une vue partielle d'une première liaison selon la présente invention.

La figure 2 représente une vue partielle d'une seconde liaison selon la présente invention.

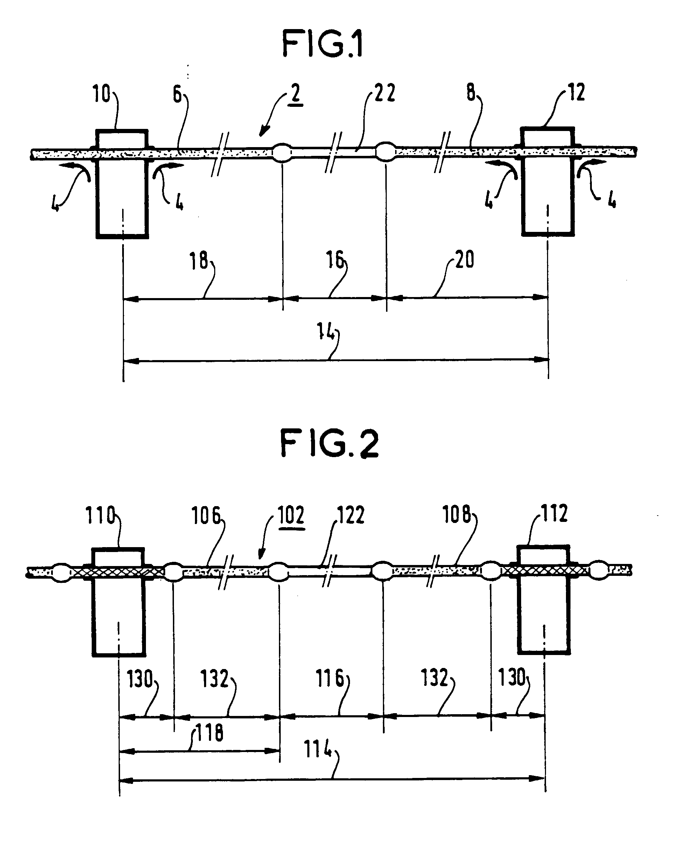

Conformément à la figure 1 une liaison selon cette invention comporte certains éléments qui lui sont communs, quant aux fonctions indiquées ci-après, avec des liaisons connues.

Un tel élément commun est une ligne de transmission 2 constituée de fibres optiques. Ces fibres s'étendent et se succédent selon une longueur de cette ligne pour guider une onde porteuse de nature optique. Cette onde porte un signal à transmettre qui est apte à être transmis, affaibli et/ou amplifié avec cette onde. Certaines de ces fibres optiques sont des fibres amplificatrices 6, 8 dopées à des concentrations de dopage convenables. Le matériau de dopage est apte à être excité par une onde de pompe 4 pour compenser un affaiblissement de cette onde porteuse et de ce signal en les amplifiant. L'onde de pompe présente une fréquence de pompe différente de la fréquence porteuse.

D'autres éléments communs sont des injecteurs de pompe localisés 10, 12 se succédant selon la longueur de la ligne de transmission pour y injecter chacun une dite onde de pompe. Ces injecteurs délimitent entre eux des sections 14 de cette ligne. Ces sections ont des longueurs et se succédent selon la longueur de cette ligne. Elles sont constituées par les dites fibres optiques,

Certaines au moins des sections de la ligne de transmission sont des sections à amplification semi-distribuée 14 comportant chacune un tronçon passif 16 et au moins un tronçon actif 18, 20. Ces tronçons actif et passif ont des longueurs et se succédent selon la longueur de cette section. Chaque tronçon actif 18 est constitué par des fibres amplificatrices et s'étend dans cette section à partir d'un injecteur de pompe 10 pour recevoir une onde de pompe 4. Le groupe de tronçons constitué par les tronçons actifs 18, 20 d'une section occupe une fraction de la longueur de cette section qui constitue une fraction active de cette longueur et qui est supérieure à 20 % et de préférence comprise entre 35 % et 85 %. Le tronçon passif 16 est constitué de fibres optiques passives 22 dépourvue du matériau de dopage. Il est situé à distance de chaque injecteur de pompe 10, 12 injectant une onde de pompe dans cette section. Il occupe une fraction de la longueur de cette section qui constitue une fraction passive de cette longueur et qui est supérieure à 10 % et de préférence comprise entre 15 % et 65 %. Plusieurs tronçons passifs pourraient éventuellement constituer un groupe.

De préférence et comme représenté, chaque section à amplification semi distribuée 14 comporte deux tronçons actifs 18, 20 s'étendant dans cette section à partir des deux injecteurs de pompe 10, 12 qui délimitent cette section. Ces deux injecteurs injectent dans cette section deux dites ondes de pompe 4, respectivement.

La deuxième liaison selon la présente invention comporte des éléments assurant les mêmes fonctions que ceux de la première et portant alors les mêmes numéros de référence augmentés de 100.

Elle présente en outre le disposition suivante : chaque tronçon actif 118 comporte successivement, à partir d'un injecteur 110, un tronçon d'amplification localisée 130 et un tronçon d'amplification distribuée 132 de longueur plus grande et de concentration de dopage plus petite que ce tronçon d'amplification localisée. Ce tronçon d'amplification localisée peut être intégrée dans l'injecteur de pompe 110 pour constituer un amplificateur localisé classique.

Il apparaît que la solution proposée selon l'invention est, comme la configuration à amplification régularisée précédemment mentionnée, intermédiaire entre l'amplification localisée et l'amplification distribuée. Elle peut être appelée configuration semi-distribuée. Elle juxtapose d'une manière plus efficace que précédemment des tronçons à fibres faiblement dopées (tronçons actifs d'amplification distribuée) et des tronçons à fibres non dopées (tronçons passifs dits à fibre blanche), avec éventuellement aussi des tronçons de fibre dopée de courte longueur, inférieure à 100 m constituant les tronçons actifs d'amplification localisée.

## Revendications

1. Liaison à fibres optiques amplificatrices, comportant :
- une ligne de transmission (2) constituée de fibres optiques s'étendant et se succédant selon une longueur de cette ligne pour guider une onde porteuse de nature optique présentant une fréquence porteuse et portant un signal à transmettre apte à être transmis, affaibli et/ou amplifié avec celle-ci, certaines de ces fibres optiques étant des fibres amplificatrices (6, 8) dopées à des concentrations de dopage par un matériau de dopage apte à être excité par une onde de pompe (4) pour compenser un affaiblissement de cette onde porteuse et de ce signal en les amplifiant, cette onde de pompe présentant une fréquence de pompe différente de cette fréquence porteuse,
- cette liaison comportant encore des injecteurs de pompe localisés (10, 12) se succédant selon la longueur de la ligne de transmission pour y injecter chacun une dite onde de pompe, ces injecteurs délimitant entre eux des sections (14) de cette ligne en formant des extrémités de ces sections, chacune de ces sections ayant au moins un injecteur constitué par un dit injecteur de pompe formant une extrémité de cette section et injectant une dite onde de pompe dans cette section, certaines au moins des sections de la ligne de transmission étant des sections à amplification semi-distribuée (14) comportant chacune d'une part un groupe de tronçons actifs (18, 20) constitués de dites fibres amplificatrices, ce groupe occupant une fraction active supérieure à 20 % de la longueur de cette section et incluant au moins un dit tronçon actif (18), d'autre part un groupe de tronçons passifs (16) constitués de fibres optiques passives dépourvues dudit matériau de dopage, ce groupe occupant une fraction passive supérieure à 10 % de la longueur de cette section et incluant au moins un dit tronçon passif (16),
- cette liaison étant caractérisée par le fait qu'au moins une dite section à amplification semi-distribuée (14) comporte un dit tronçon actif (18) s'étendant à partir d'un dit injecteur (10) de cette section et suivi d'un dit tronçon passif (16) à distance de cet injecteur.

2. Liaison selon la revendication 1 caractérisée par le fait que ladite fraction active est comprise entre 35 % et 85 % et ladite fraction passive entre 15 % et 65 %.

3. Liaison à fibres optiques amplificatrices selon la revendication 1 caractérisée par le fait que chaque dite section à amplification semi distribuée (14) comporte deux dits tronçons actifs (18, 20) s'étendant dans cette section à partir de deux dits injecteurs de pompe (10, 12) de cette section respectivement, de part et d'autre d'un dit tronçon passif (16) de cette section.

4. Liaison à fibres optiques amplificatrices selon la revendication 1 caractérisée par le fait que chaque dit tronçon actif (118) s'étendant à partir d'un dit injecteur (110) d'une dite section comporte successivement, à partir dudit injecteur (110), un tronçon d'amplification localisée (130) et un tronçon d'amplification distribuée (132) de longueur plus grande et de concentration de dopage plus petite que ce tronçon d'amplification localisée.

## Patentansprüche

1. Verbindung mit verstärkenden Lichtleitfasern, die aufweist:
- eine Übertragungsleitung (2) aus Lichtleitfasern, die sich gemäß einer Länge dieser Leitung erstrecken und aufeinander folgen, um eine Trägerwelle mit einer Trägerfrequenz optischer Art zu führen, die ein zu übertragendes Signal trägt, das mit dieser übertragen, gedämpft und/oder verstärkt werden kann, wobei einige dieser Lichtleitfasern verstärkende Fasern (6, 8) sind, die mit einem Dotiermaterial einer Konzentration dotiert sind, das durch eine Pumpwelle (4) erregt werden kann, um eine Dämpfung dieser Trägerwelle und dieses Signals zu kompensieren, indem sie verstärkt werden, wobei sich die Frequenz der Pumpwelle von der Trägerfrequenz unterscheidet,
- weiter lokalisierte Pumpinjektoren (10, 12), die gemäß der Länge der Übertragungsleitung aufeinander folgen, um je eine Pumpwelle zu injizieren, und die zwischen sich Bereiche (14) dieser Leitung begrenzen, indem sie die Enden dieser Bereiche bilden, wobei jeder dieser Bereiche mindestens Pumpinjektor aufweist, welcher ein Ende dieses Bereichs bildet und welcher eine Pumpwelle in diesen Bereich injiziert, wobei mindestens einige Bereiche der Übertragungsleitung Bereiche mit halb-verteilter Verstärkung (14) sind, die je einerseits eine Gruppe von aus Verstärkungsfasern bestehenden aktiven Abschnitten (18, 20) enthalten, die einen aktiven Bruchteil von mehr als 20% der Länge dieses Bereichs einnimmt und mindestens einen aktiven Abschnitt (18) aufweist, und andererseits eine Gruppe von aus passiven Lichtleitfasern ohne Dotiermaterial bestehenden passiven Abschnitten (16), die einen passiven Bruchteil von mehr als 10% der Länge dieses Bereichs einnimmt und mindestens einen passiven Abschnitt (16) aufweist,
dadurch gekennzeichnet, daß mindestens ein Bereich mit halb-verteilter Verstärkung (14) einen aktiven Abschnitt (18) aufweist, der sich ausgehend von einem Injektor (10) dieses Bereichs erstreckt und von einem passiven Abschnitt (16) entfernt von diesem Injektor gefolgt wird.

2. Verbindung nach Anspruch 1, dadurch gekennzeichnet, daß der aktive Bruchteil zwischen 35 und 85% und der passive Bruchteil zwischen 15 und 65% der Länge des Bereichs beträgt.

3. Verbindung mit verstärkenden Lichtleitfasern nach Anspruch 1, dadurch gekennzeichnet, daß jeder Bereich mit halb-verteilter Verstärkung (14) zwei aktiven Abschnitte (18, 20) aufweist, die sich in diesem Bereich ausgehend von zwei Pumpinjektoren (10, 12) dieses Bereichs zu beiden Seiten eines passiven Abschnitts (16) dieses Bereichs erstrecken.

4. Verbindung mit verstärkenden Lichtleitfasern nach Anspruch 1, dadurch gekennzeichnet, daß jeder aktive Abschnitt (118), der von einem Injektor (110) eines Bereichs ausgeht, nacheinander ausgehend von dem Injektor (110) einen Abschnitt lokalisierter Verstärkung (130) und einen Abschnitt verteilter Verstärkung (132) größerer Länge und geringerer Dotierkonzentration als dieser Abschnitt lokalisierter Verstärkung aufweist.

## Claims

1. A connection having amplifying optical fibers, the connection comprising:
a transmission line (2) constituted by optical fibers extending in succession along the length of said line to guide an optical type carrier wave having a carrier frequency and carrying a signal to be transmitted which is suitable for being transmitted, attenuated, and/or amplified together with the carrier frequency, some of said optical fibers being amplifying fibers (6, 8) doped with doping concentrations of a dopant suitable for being excited by a pump wave (4) to compensate attenuation of said carrier wave and of said signal by amplifying them, said pump wave having a pump frequency that is different from said carrier frequency;
said connection further including localized pump injectors (10, 12) that follow one another along the length of the transmission line, each serving to inject at least one of said pump waves therein, said injectors delimiting sections of said line (14) by constituting the ends of said sections, each of said sections having at least one injector constituted by one of said pump injectors forming an end of said section and injecting one of said pump waves into said section, at least some of the sections of the transmission line being semi-distributed amplification sections (14) each including firstly a group of active portions (18, 20) constituted by said amplifying fibers, said group occupying an active fraction comprising more than 20% of the length of said section and including at least one of said active portions (18), and a group of passive portions (16) constituted by passive optical fibers not provided with said dopant, said group occupying a passive fraction comprising more than 10% of the length of said section and including at least one of said passive portions (16); and
said connection being characterized by the fact that at least one of said semi-distributed amplification sections (14) includes one of said active portions (18) that extends from one of said injectors (10) of said injector and that is followed by one of said passive portions (16) that is remote from said injector.

2. A connection according to claim 1, characterized by the fact that said active fraction lies in the range 35% to 85% of said length and said passive fraction lies in the range 15% to 65% of said length.

3. An amplifying optical fiber connection according to claim 1, characterized by the fact that each of said semi-distributed amplification sections (14) includes two of said active portions (18, 20) extending within said section from respective ones of the two said pump injectors (10, 12) of said section, and extending on either side of one of said passive portions (16) of said section.

4. An amplifying optical fiber connection according to claim 1, characterized by the fact that each of said active portions (118) extending from one of said injectors (110) of one of said sections comprises, in succession from said injector (110): a lumped amplification portion (130) and then a distributed amplification portion (132) of greater length and lower dopant concentration than said lumped amplification portion.
